# EUROPEAN PATENT APPLICATION

(11) **EP 2 781 299 A2**
(43) Date of publication of application: **24.09.2014**
(21) Application number: 14159076.0
(22) Date of filing: 12.03.2014
(51) Int. Cl.: B23P 21/00

(54) **Workpiece assembling apparatus and workpiece assembling method**

(30) Priority: 18.03.2013 JP 2013055236
(71) Applicant: Kabushiki Kaisha Yaskawa Denki, Kitakyushu-shi, Fukuoka 806-0004 (JP)
(72) Inventor: Shiota, Akihiro, Kitakyushu-shi, Fukuoka 806-0004 (JP); Harada, Toshiyuki, Kitakyushu-shi, Fukuoka 806-0004 (JP); Matsufuji, Kenji, Kitakyushu-shi, Fukuoka 806-0004 (JP); Okawa, Ken, Kitakyushu-shi, Fukuoka 806-0004 (JP); Ogasawara, Shinji, Kitakyushu-shi, Fukuoka 806-0004 (JP)
(74) Representative: Viering, Jentschura & Partner Patent- und Rechtsanwälte

(57) **Abstract**

A workpiece assembling apparatus (10) includes: a conveyor (C) configured to convey a workpiece (W); a plurality of robots (R1, R2, and R3) arranged along the conveyor, the plurality of robots being configured to perform a same work on a workpiece conveyed by the conveyor; a parts-supplier (S) configured to supply parts to the plurality of robots; and a controller (30) configured to control the robots and the conveyor. The controller controls the robot disposed at a downstream side to perform an unfinished work of the robot disposed at an upstream side in addition to a predetermined work in a case where the robot disposed at the upstream side has not completed a predetermined work.

## Description

### BACKGROUND

### 1. Technical field

The present disclosure relates to a workpiece assembling apparatus and a workpiece assembling method.

### 2. Related art

A line for assembling industrial products significantly affects production efficiency. JP-A-2003-62727 discloses an assembling apparatus that facilitates dealing with increases in production volume or changes in specifications and that has high production efficiency.

The industrial products are assembled through various processes. In the case where these processes are continuously performed, if there is a process requiring a long time compared with other processes, this process reduces the production efficiency as a bottleneck.

One object of the present disclosure is to provide a workpiece assembling apparatus and a workpiece assembling method that achieve high production efficiency.

### SUMMARY

A workpiece assembling apparatus of the present disclosure includes: a conveyor configured to convey a workpiece; a plurality of robots arranged along the conveyor, the plurality of robots being configured to perform a same work on a workpiece conveyed by the conveyor; a parts-supplier configured to supply parts to the plurality of robots; and a controller configured to control the robots and the conveyor, wherein the controller controls the robot disposed at a downstream side to perform an unfinished work of the robot disposed at an upstream side in addition to a predetermined work in a case where the robot disposed at the upstream side has not completed a predetermined work.

### BRIEF DESCRIPTION OF DRAWINGS

Fig. 1 is a plan view schematically illustrating an embodiment of a workpiece assembling apparatus according to one embodiment of the present disclosure; and
Fig. 2 is a perspective view illustrating one example of an industrial robot assembled by the workpiece assembling apparatus illustrated in Fig. 1.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A workpiece assembling apparatus of the present disclosure includes: a conveyor configured to convey a workpiece; a plurality of robots arranged along the conveyor, the plurality of robots being configured to perform a same work on a workpiece conveyed by the conveyor; a parts-supplier configured to supply parts to the plurality of robots; and a controller configured to control the robots and the conveyor, wherein the controller controls the robot disposed at a downstream side to perform an unfinished work of the robot disposed at an upstream side in addition to a predetermined work in a case where the robot disposed at the upstream side has not completed a predetermined work.

The present disclosure provides a workpiece assembling apparatus and a workpiece assembling method that are effective for achieving high production efficiency.

Hereinafter, a detailed description will be given of one embodiment of the present disclosure with reference to the accompanying drawings. In the description, the element that is substantially the same or has substantially the same function will be provided with the same reference numeral, and the duplicated description will be omitted. Here, the term "workpiece" means an object to be assembled, for example, an industrial product or its part.

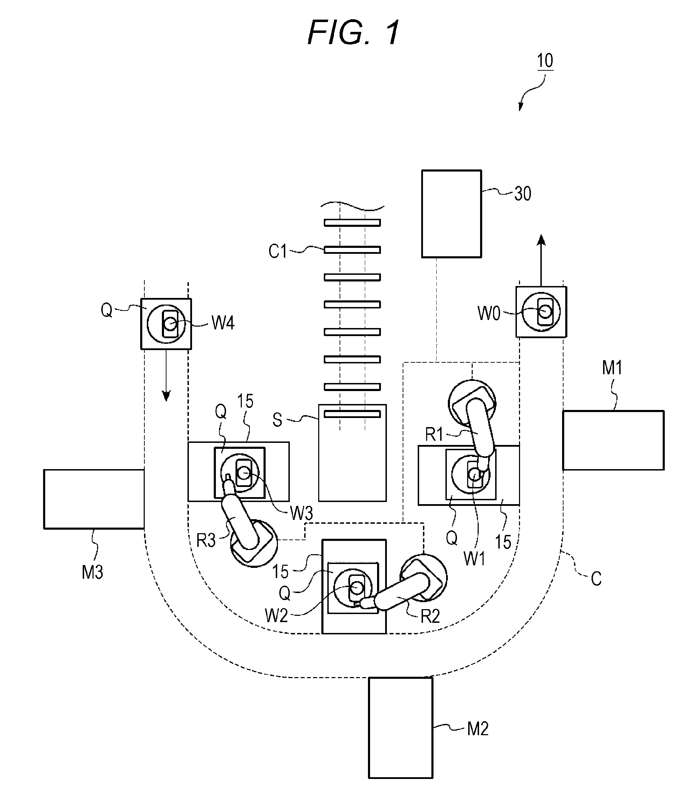

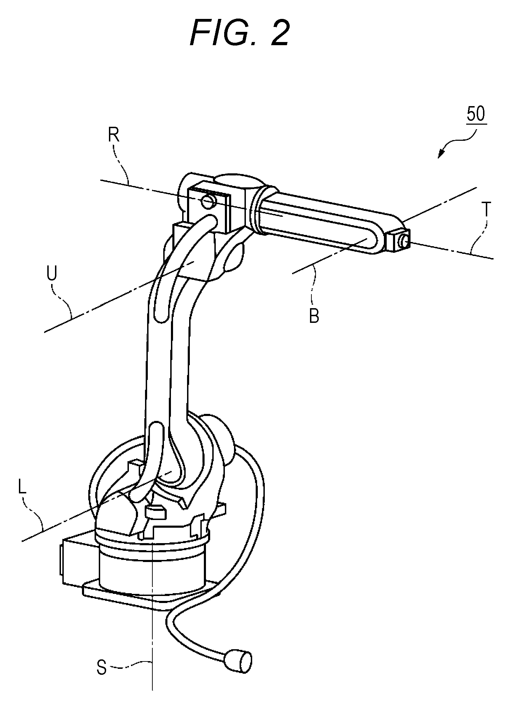

An assembling apparatus 10 illustrated in Fig. 1 is an apparatus that performs screw tightening work in a manufacturing process of an industrial robot 50 illustrated in Fig. 2. The industrial robot 50 includes an S-shaft, an L-shaft, a U-shaft, a B-shaft, an R-shaft, and a T-shaft.

The assembling apparatus 10 includes three robots R1, R2, and R3. All of these robots perform screw tightening work (the same work). In the vicinity of each of the robots R1, R2, and R3, a table 15 is arranged. On this table 15, the screw tightening work is performed on a workpiece W. To the robots R1, R2, and R3, bolts are supplied from a parts-supplier S. The parts may be supplied from the parts-supplier S to each of the robots R1, R2, and R3 by any of automatic control and hand work by a worker.

As illustrated in Fig. 1, a conveyor C is arranged surrounding the parts-supplier S. From the upstream side toward the downstream side of the conveyor C, the robots R3, R2 and R1 are arranged along the conveyor C (for example, in series). The conveyor C is controlled by a controller 30 so as to convey a surface plate Q on which the workpiece W is placed. In Fig. 1, the workpiece W is conveyed from the upper left toward the bottom, and then is conveyed toward the upper right. Fig. 1 illustrates a state where the robots R3, R2 and R1 perform screw tightening work on respective workpieces W3, W2, and W1. At the upstream side of the conveyor C, a subsequent workpiece W4 is carried in. At the downstream side of the conveyor C, a previous workpiece W0 on which the work is done is carried out to the subsequent process.

The conveyor C can employ, for example, a roller conveyor or a belt conveyor. The shape of the conveyor C surrounding the parts-supplier S is not limited to a U shape as illustrated in Fig. 1, and may be approximately a ring shape where a starting end and a terminating end are separated from each other. Between the starting end and the terminating end, a conveyor for parts supply may be arranged. Alternatively, a space between the starting end and the terminating end may be used as a passage for workers during maintenance of the robots R1, R2, and R3.

Arranging the conveyor C so as to surround the parts-supplier S has an advantage that concentrates management of parts supply on one parts-supplier S. This also ensures a sufficiently short distance from the parts-supplier S to each robot. Accordingly, the following effects are provided. Firstly, time and energy required for conveyance can be reduced. In addition, a robot in which parts shortage occurs due to some trouble can receive a supply of parts to be supplied to a different robot. Thus, this assembling apparatus 10 can achieve an operation with high flexibility. The parts-supplier S receives a supply of parts via the conveyor C1.

The assembling apparatus 10 can be controlled by the controller 30. The controller 30 controls, for example, the operations of the robots R1, R2, and R3 and the conveyor C. That is, the controller 30 monitors the works of the robots R1, R2, and R3 and assigns works to the robots R1, R2, and R3. The controller 30 stores works to be performed by the respective robots R1, R2, and R3.

For example, in the case where the robot R3 disposed at the most upstream side has not completed a predetermined work for the robot R3 (in the case where a part or all of the work has been unfinished), the controller 30 outputs a command to the robot R2 such that the robot R2 performs the unfinished work of the robot R3 in addition to a predetermined work for the robot R2. That is, the controller 30 controls the robot R2 to perform the unfinished work of the robot R3 in addition to the predetermined work for the robot R2.

Further, the controller 30 stores the works to be completed by the three robots R1, R2, and R3. For example, in the case where the robot R3 has not completed the predetermined work for the robot R3 and the robot R2 has not recovered the delay of the work, the controller 30 may control the robot R1 disposed at the most downstream side to recover the delay such that the robot R1 performs a larger amount of work than a predetermined work for the robot R1. When the robot R1 completes all the remaining work so as to recover the delay of the work, the workpiece W can be conveyed to the subsequent process without delay of the takt time.

Possible cases where the robot has not completed the predetermined work include, for example, a case where the robot has failed picking up the bolt or a case where the robot takes time to detect screw holes due to a misaligned direction of the workpiece W.

In the case where the robot R2 has not completed the predetermined work for the robot R2, the controller 30 controls the robot R1 to perform the unfinished work of the robot R2 in addition to the predetermined work for the robot R1. In the case where the robot R1 has not recovered the unfinished work of the robot R2, the controller 30 controls the conveyor C to convey the workpiece W to a repair station M1. Similarly, in the case where the robot R1 disposed at the most downstream side has not completed the predetermined work robot R1, the controller 30 controls the conveyor C to convey the workpiece W to the repair station M1. If the robot disposed at the downstream side performs work in a predetermined amount or more, the work of the robot disposed at the upstream side may be delayed to an unrecoverable extent. For this case, repair stations M3 and M2 may be disposed at respective downstream sides of the robots R3 and R2.

Next, a description will be specifically given of a workpiece assembling method using the assembling apparatus 10 with reference to Fig. 1. The assembling method according to this embodiment includes a process of supplying parts from the parts-supplier S to the robots R1, R2, and R3 and a process in which the respective robots R1, R2, and R3 perform the same predetermined work on the workpiece W conveyed by the conveyor C. In the case where a robot disposed at an upstream side has not completed the predetermined work, a robot disposed at a downstream side performs the unfinished work of the robot disposed at the upstream side in addition to the predetermined work.

In the following description, for example, an assembly work of the S-shaft of the industrial robot 50 illustrated in Fig. 2 is assumed. In this assembly work of the S-shaft, screw tightening work at 15 places is completed for 60 seconds in total. Accordingly, the controller 30 controls the assembling apparatus 10 such that the three robots R1, R2, and R3 each complete the screw tightening work at five places for 15 seconds.

As illustrated in Fig. 1, the work is smoothly performed on workpieces W sequentially conveyed by the conveyor C. At some point, assume that the robot R3, which is disposed at the most upstream side, has spent extra time due to failure of picking up bolts for a workpiece W3. In this case, assume that the robot R3 has completed the work only in three places within 15 seconds and has unfinished screw tightening in remaining two places. The controller 30 detects this state and instructs the robot R2 to perform screw tightening in seven places on the received workpiece W3. That is, the robot R2 performs the unfinished screw tightening of the robot R3 in two places in addition to predetermined five places for the workpiece W3.

When the robot R2 has completed the screw tightening in seven places for the workpiece W3, the assembling apparatus 10 recovers to a normal state. However, assume that the robot R2 has completed screw tightening in six places for the workpiece W3 in 15 seconds while screw tightening in one position has been unfinished. The controller 30 instructs the robot R1 disposed at the most downstream side to perform screw tightening in six places when receiving the workpiece W3. That is, the robot R1 performs the unfinished screw tightening of the robot R2 in one position in addition to predetermined five places for the workpiece W3.

When the robot R1 has completed the screw tightening in six places for the workpiece W3, the assembling apparatus 10 recovers to a normal state. In the case where the robot R1 has not completed the screw tightening in the remaining six places for the workpiece W3 in 15 seconds, the controller 30 controls the conveyor C to convey the workpiece W3 to the repair station M1.

The controller 30 may extend the work time for the robot R1 to allow the robot R1 to complete the remaining screw tightening work, instead of performing control for conveying the workpiece W3 to the repair station M1. That is, in the case where the robot R1 disposed at the most downstream side has not completed the predetermined work for the robot R1 and the unfinished work of a robot arranged at the upstream side of the robot R1, the controller 30 may extend the work time for the robot R1 disposed at the most downstream side.

In the case where any of the robots has not completed the predetermined work, the controller 30 may extend the work time for the robot R1 disposed at the most downstream side.

The controller 30 may control the robot that has not completed the predetermined work to perform a larger amount of work than the predetermined work on the subsequent workpiece W. For example, assume that the robot R3 has not completed the predetermined screw tightening work for the workpiece W3. In this case, the controller 30 controls the robot R2 and, in some cases, the robot R1 to perform work in a predetermined amount or more for the workpiece W3. In this control state, when delay on screw tightening for the subsequent workpiece W4 occurs, it is difficult to recover delay due to small extra processing capacities of the robots R2 and R1. Accordingly, the controller 30 may control the robot R3 to perform work in a predetermined amount or more in advance so as to reduce the load on the robots R2 and R1.

With the assembling apparatus 10 and the assembling method using this assembling apparatus 10, the three robots R1, R2, and R3 collaboratively perform screw tightening work in a predetermined amount. Accordingly, sufficient screw tightening work, which is likely to be a bottleneck, can be performed within a predetermined time. This allows supplying the workpiece W to the subsequent process without delay. As a result, the assembling apparatus 10 and the assembling method using this assembling apparatus 10 can manufacture the industrial robot 50 with high efficiency.

The embodiment of the present disclosure has been described in detail above. The present disclosure is not limited to the above-described embodiment. For example, in the above-described embodiment, the assembling apparatus 10 includes three robots. However, the number of robots may be two or equal to or more than four.

In the above-described embodiment, the case where the industrial robot 50 is assembled has been described as an example. However, the embodiment of the present disclosure may be applied to assembly of a double arm robot instead of the industrial robot 50. Alternatively, the embodiment of the present disclosure may be applied to assembly of industrial products other than robots.

Further, in the above-described embodiment, screw tightening work has been described as an example of the same work performed by a plurality of robots. However, this work is not limited to screw tightening. The embodiment of the present disclosure is effective for work that is likely to be a bottleneck due to the necessity of a relatively long time. Concrete examples of the work other than screw tightening include, for example, ultraviolet irradiation or heating for hardening adhesive and soldering.

In the above-described embodiment, as one example, the conveyor C is arranged surrounding the parts-supplier S. However, the conveyor may be arranged in a straight line or in a curved line. In this case, the robot receives supply of parts by the conveyor or an automatic guided vehicle (AGV).

The workpiece assembling apparatus and the workpiece assembling method of the present disclosure may be the following first to seventh assembling apparatuses and first workpiece assembling method.

The first workpiece assembling apparatus includes a plurality of robots, which performs the same work among assembly works for a workpiece, a parts-supplier, which supplies parts to the plurality of robots, a conveyor, which conveys the workpiece from the robot at an upstream side to the robot at a downstream side, and a controller, which monitors work of the robots and assigns work to the robots. When the robot at the upstream side has not completed a predetermined work, the controller commands the robot at the downstream side to perform a work that the robot at the upstream side has not been able to complete in addition to a predetermined work.

In the second assembling apparatus according to the first assembling apparatus, the conveyor is disposed surrounding the parts-supplier.

In the third assembling apparatus according to the first or second assembling apparatus, when the robot at the most downstream side has not completed a predetermined work, the controller commands the conveyor to convey a workpiece where work is not completed to a repair station.

In the fourth assembling apparatus according to any one of the first to third assembling apparatuses, the controller commands the robot that has not completed a predetermined work to perform a predetermined amount or more of work on the subsequent workpiece.

In the fifth assembling apparatus according to any one of the first to fourth assembling apparatuses, when the robot at the upstream side has not completed a predetermined work and, further, the robot at the downstream side of this robot has not been able to recover delay of work, the controller commands the robot at the further downstream side to perform a predetermined amount or more of work, so as to recover the delay.

In the sixth assembling apparatus according to any one of the first to fifth assembling apparatuses, the same work is one work selected from a group consisting of screw tightening, ultraviolet irradiation or heating for hardening adhesive, and soldering.

In the seventh assembling apparatus according to any one of the first to sixth assembling apparatuses, the workpiece is an industrial robot or a part of the industrial robot.

The first workpiece assembling method includes: supplying parts to a plurality of robots arranged in series; and performing the same predetermined work for respective robots on a workpiece conveyed by a conveyor. When the robot at the upstream side has not been able to complete a predetermined work, the robot at the downstream side performs a work that the robot at the upstream side has not been able to complete, in addition to a predetermined work.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A workpiece assembling apparatus (10), comprising:
a conveyor (C) configured to convey a workpiece (W);
a plurality of robots (R1, R2, and R3) arranged along the conveyor, the plurality of robots being configured to perform a same work on a workpiece conveyed by the conveyor;
a parts-supplier (S) configured to supply parts to the plurality of robots; and
a controller (30) configured to control the robots and the conveyor, wherein
the controller controls the robot disposed at a downstream side to perform an unfinished work of the robot disposed at an upstream side in addition to a predetermined work in a case where the robot disposed at the upstream side has not completed a predetermined work.

2. The workpiece assembling apparatus according to claim 1, wherein
the conveyor is disposed surrounding the parts-supplier.

3. The workpiece assembling apparatus according to claim 1 or 2, wherein
the controller controls the conveyor to convey a workpiece where the work is not completed to a repair station in a case where the robot (R1) disposed at a most downstream side has not completed a predetermined work for this robot and an unfinished work of the robots (R2, R3) arranged at an upstream side of this robot.

4. The workpiece assembling apparatus according to claim 1 or 2, wherein
the controller extends work time for the robot disposed at a most downstream side in a case where the robot (R1) disposed at the most downstream side has not completed a predetermined work for this robot and an unfinished work of the robots (R2, R3) arranged at an upstream side of this robot.

5. The workpiece assembling apparatus according to any one of claims 1 to 4, wherein
the controller controls the robot that has not completed a predetermined work to perform a large amount of work on a subsequent workpiece compared with the predetermined work.

6. The workpiece assembling apparatus according to any one of claims 1 to 5, wherein
the controller controls the robot disposed at a further downstream side to perform a large amount of work compared with a predetermined work in a case where the robot disposed at an upstream side has not completed the predetermined work and the robot disposed at a downstream side of this robot has not recovered delay of work.

7. The workpiece assembling apparatus according to any one of claims 1 to 6, wherein
the same work is one work selected from a group consisting of screw tightening, ultraviolet irradiation or heating for hardening adhesive, and soldering.

8. The workpiece assembling apparatus according to any one of claims 1 to 7, wherein
the workpiece is an industrial robot or a part of the industrial robot.

9. A workpiece assembling method, comprising:
supplying parts to a plurality of robots (R1, R2, and R3) arranged along a conveyor (C);
performing a same predetermined work on a workpiece (W) by each robot, the workpiece being conveyed by the conveyor; and
performing an unfinished work of the robot disposed at an upstream side in addition to a predetermined work for the robot disposed at a downstream side in a case where the robot disposed at the upstream side has not completed a predetermined work.
